Europäisches Patentamt

**(19)** European Patent Office

Office européen des brevets

**(11)** Numéro de publication: **0 210 892**
**B1**

**(12)** # FASCICULE DE BREVET EUROPÉEN

**(45)** Date de publication du fascicule du brevet:
02.08.89

**(51)** Int. Cl.⁴: **G 01 L 25/00**

**(21)** Numéro de dépôt: **86401440.2**

**(22)** Date de dépôt: **27.06.86**

**(54)** Dispositif polyvalent d'étalonnage et de contrôle du couple de serrage d'un organe de liaison du type vis-écrou.

**(30)** Priorité: **02.07.85 FR 8510266**

**(43)** Date de publication de la demande:
**04.02.87 Bulletin 87/6**

**(45)** Mention de la délivrance du brevet:
**02.08.89 Bulletin 89/31**

**(84)** Etats contractants désignés:
**AT BE CH DE GB IT LI LU NL SE**

**(56)** Documents cité:
**EP-A-0 119 928**
**FR-A-2 261 843**
**US-A-4 253 325**

**ENGINEERS DIGEST, vol. 34, no. 6, juin 1973, page 7, Londres, GB; "Portable electronic torque and tension analyser"**

**(73)** Titulaire: **GEORGES RENAULT INNOVATIONS par abrévation GRIN, 199 route de Clisson, F-44230 St- Sebastien- S-Loire (FR)**

**(72)** Inventeur: **Jousse, Pierre- André, 70 rue de Lourmel, F-75015 Paris (FR)**
Inventeur: **Noguet, Henri, 14 route de la Madeleine, F-44160 Pontchâteau (FR)**

**(74)** Mandataire: **Phélip, Bruno, c/o Cabinet Harlé & Phélip 21, rue de La Rochefoucauld, F-75009 Paris (FR)**

## Description

La présente invention concerne les dispositifs permettant l'étalonnage de couple d'un outil de vissage, ainsi que les opérations de contrôle et éventuellement de retouche du couple de serrage sur un assemblage par organes de liaison du type vis ou écrou.

Il est actuellement connu:

- des moyens d'étalonnage de couple pour les machines appelées visseuses, genre coffret équipé de capteur statique et d'une électronique associée,
- des moyens de contrôle de couple tels que les clés dynanométriques ou les capteurs, à déclenchement ou à affichage.

Ces moyens de par leurs fonctions bien distinctes sont réalisés et utilisés séparément. Leur conception ne permet pas de procéder au contrôle de couple sur un assemblage déjà serré avec un équipement d'étalonnage, ni à l'étalonnage de machines à visser avec un équipement de contrôle de couple.

Le dispositif, suivant l'invention, permet de réaliser à l'aide d'un même équipement:

- le contrôle ou la retouche de couple sur un assemblage déjà serré, en cours de fabrication ou en opération contrôle,
- le contrôle ou l'étalonnage de machines à visser à arrêt au couple.

L'ensemble du dispositif, objet de l'invention, se compose de trois parties:

- un tournevis dynanométrique à élément déformant,
- un coffret électronique de mesure de couple à affichage digital muni d'un tiroir escamotable destiné à assurer le maintien du tournevis dynanométrique,
- une embase ou socle sur lequel s'ajuste et se fixe le coffret électronique de mesure.

Dans l'utilisation du dispositif au titre de moyen d'étalonnage ou de contrôle de ce dernier, le tournevis dynanométrique est rendu solidaire du coffret de mesure ledit tournevis faisant dans ce cas office de capteur statique.

Le coffret électronique est un amplificateur d'extensométrie comportant un amplificateur d'entrée à haute impédance, un dispositif de correction automatique du zéro, un détecteur de valeur absolue et un détecteur de crète ou valeur maximum du couple.

Des jauges électriques d'extensométrie collées sur l'élément déformant réalisent un pont de Wheatstone. Le couple appliqué au tournevis agit sur l'élément déformant ainsi que sur les jauges; la variation de la résistance de celles-ci détruit l'équilibre du pont. On mesure cette variation par le courant ou la tension de déséquilibre.

Les dessins annexés illustrent, à titre non limitatif, un mode de réalisation possible du dispositif conforme à la présente invention. Ceux-ci représentent:

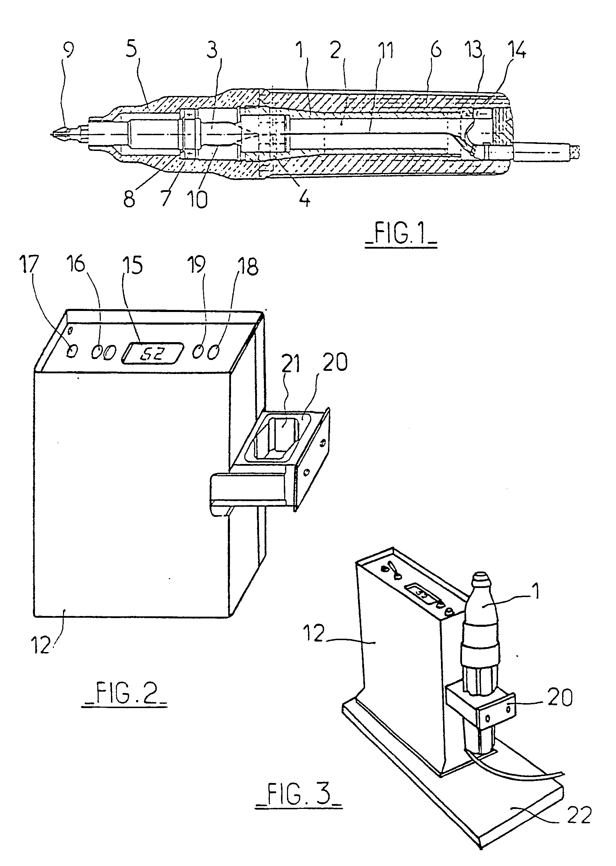

- en figure 1, une vue en coupe par l'axe du tournevis dynanométrique équipant le dispositif,
- en figure 2, le coffret électronique de mesure de couple associé au tournevis dynanométrique,
- en figure 3, une vue en perspective de l'ensemble coffret-tournevis regroupé sur un socle.

Tel que représenté en figure 1, le tournevis dynanométrique est constitué d'un corps de poignée (1) comportant un alésage épaulé 2 à l'une des extrémités duquel s'encastre l'élément déformant 3, la liaison entre les deux pièces étant complétée par la mise en place d'une goupille 4 assurant l'immobilisation en translation et en rotation de l'élément déformant. Sur le corps de poignée est vissé un carter ou nez de protection 5 le corps est revêtu d'une gaine extérieure 6 en mousse dont le profil assure à l'opérateur une préhension confortable du tournevis. La partie saillante de l'élément déformant 3 en acier à ressort est centrée dans le carter 5 par l'intermédiaire d'un roulement 7 immobilisé en translation par une butée rapportée du type circlips 8: il reçoit à son extrémité un embout interchangeable 9 ou outil en forme de tournevis, de clé ou autre. Sur l'élément déformant sont collées quatre jauges électriques d'extensométrie 10 reliées par câbles 11 s'inscrivant dans l'alésage du corps de la poignée et se raccordant au coffret de mesure 12, la poignée comportant une prise de masse constituée d'une cosse de masse 13 et d'une vis 14 maintenant la dite cosse en contact permanent avec le corps de poignée. Les jauges sont fixées sur l'élément déformant vu corps d'épreuve suivant un montage en pont de Wheatstone, lequel est équilibré à l'état neutre, sans torsion, ni contrainte.

Le couple exercé, nécessaire au vissage, appliqué au tournevis provoque la déformation de l'élément 3 ainsi que les jauges qui y sont collées il en résulte un déséquilibre du pont par variation de la résistance des jauges. On mesure cette variation de résistance par le courant ou la tension de déséquilibre.

Le coffret 12 assure la fourniture du courant et des mesures: ce coffret est un amplificateur d'extensométrie constitué de quatre étages:

- un premier étage constitué d'un amplificateur d'entrée à haute impédance, du type amplificateur d'instrumentation,

un second étage correspondant à la correction automatique de zéro. Le but de cet étage est d'assurer la remise à zéro absolu par bouton poussoir en mémorisant une éventuelle dérive due à des phénomènes mécaniques ou thermiques et en retranchant ou en ajoutant selon le signe cette valeur à la mesure finale,

- un troisième étage jouant le rôle de détecteur de valeur absolue en redressant les signaux pour obtenir en sortie des signaux ayant la même polarité quel que soit le sens de torsion du capteur pour assurer la compatibilité avec l'étage suivant,
- un quatrième étage faisant office de détecteur de crête: il permet de mémoriser la valeur maximum du couple appliqué sur l'élément déformant.

Le coffret est équipé d'un réglage de bande passante comportant quatre positions. L'intérêt du dispositif est de tenir compte de la raideur de l'assemblage, sur lequel intervient la machine à visser en cours d'étalonnage, la dernière position dite "décollement" étant spécialisée pour les contrôles par décollement au resserrage. La face supérieure du coffret comporte, en sa partie centrale un dispositif d'affichage digital 15 indiquant la valeur du couple, ainsi que des boutons de réglage correspondant:

- en 16 à la mise en service ou hors service du coffret,
- en 17 à la sélection du type de serrage désiré: normal, dur, élastique, décollement;
- en 18 à la correction du zéro,
- en 19 à la détection de crête.

L'enveloppe du coffret comporte sur l'une de ses faces verticales transversales un tiroir escamotable 20 destiné, en position tirée, à constituer un ratelier de soutien du tournevis dynanométrique dans la fonction d'étalonnage, ce dernier tenant dans ce cas le rôle de capteur statique. Le tiroir comporte à cet effet une découpe 21, de forme conjuguée à la section droite de la gaine extérieure 6 du corps de poignée.

L'ensemble du poste d'étalonnage ainsi constitué est fixé sur un socle 22.

Le dispositif, objet de l'invention, peut être utilisé dans tous les cas où il doit être exercé un contrôle de la valeur du couple exercé sur un organe de serrage par rotation, ainsi que l'étalonnage de l'outil employé pour effectuer ce serrage; l'invention s'applique en particulier aux machines ou outils à visser.

**Revendications**

1. Dispositif permettant de réaliser soit le contrôle ou la retouche du couple de serrage d'un organe de liaison par vissage sur un assemblage déjà serré, en cours de fabrication ou en opération contrôle, soit le contrôle ou l'étalonnage de la machine ou de l'outil à visser à arrêt au couple, caractérisé en ce qu'il est constitué par l'association d'un tournevis dynanométrique à élément déformant (1) et d'un coffret électronique de mesure de couple (12), le contrôle du couple de serrage s'obtenant par la mesure de la variation de la résistance de jauges d'extenso-métrie solidaires de l'élément déformant, par l'intermédiaire du courant fourni par le coffret, ledit tournevis, rendu solidaire du coffret faisant office de capteur statique dans la phase d'utilisation du dispositif comme moyen d'étalonnage ou de contrôle d'étalonnage.

2. Dispositif selon la revendication 1, caractérisé en ce que le tournevis dynanométrique est constitué d'un corps de poignée (1) comportant un alésage épaulé (2) dans lequel s'encastre l'élément déformant (3) immobilisé en translation et en rotation au moyen d'une goupille (4), ledit corps (1) revêtu d'une gaine extérieure en mousse (6) de profil assurant une préhension confortable du tournevis, étant prolongé par un carter vissé ou nez de protection (5) à l'intérieur duquel est centrée au moyen d'un roulement (7) l'extrémité libre de l'élément déformant (3), laquelle porte en sa partie terminale un embout interchangeable (9) ou outil de vissage, ledit élément déformant recevant par collage, quatre jauges électriques d'extensométrie (10) dont la variation de résistance provoquée par leur déformation sous l'action du couple appliqué au tournevis est mesurée par le coffret électronique (12).

3. Dispositif selon la revendication 2, caractérisé en ce que les jauges électriques d'extenso-métrie (10) sont collées sur l'élément déformant (3) selon un montage en pont de Wheatstone équilibré à l'état neutre, en l'absence de toute torsion ou contrainte sur l'élément déformant la variation de résistance desquelles jauges se déformant sous l'action du couple étant mesurée par le courant ou la tension de déséquilibre du pont, la fourniture du courant et les mesures étant assurées par le coffret.

4. Dispositif selon les revendications 1, 2 et 3 prises ensemble, caractérisé en ce que le coffret de mesure (12) est un amplificateur d'extenso-métrie constitué de quatre étages:
- un premier étage constitué d'un amplificateur d'entrée à haute impédance,
- un second étage correspondant à la correction automatique de zéro, assurant la remise à zéro absolu par bouton poussoir en memorisant une eventuelle dérive due à des phénomènes mécaniques ou thermiques et en retranchant ou en ajoutant selon le signe cette valeur à la mesure finale,
- un troisième étage jouant le rôle de détecteur de valeur absolue en redressant les signaux pour obtenir en sortie des signaux ayant la même polarité quel que soit le sens de torsion du capteur pour assurer la compatibilité avec l'étage suivant,
- un quatrième étage faisant office de détecteur de crête permettant de mémoriser la valeur maximum du couple appliqué sur l'élément déformant.

5. Dispositif selon l'ensemble des revendications 1 à 4, caractérisé en ce que le coffret de mesure (12) est équipé d'un dispositif de réglage de bande passante comportant quatre positions tenant compte de la raideur de l'assemblage sur lequel intervient l'élément visseur en cours d'étalonnage, la dernière position étant spécifique aux contrôles par décollement au resserrage.

6. Dispositif selon l'ensemble des revendications 1 à 5, caractérisé en ce que le coffret (12) comporte sur une de ses faces verticales transversales un tiroir escamotable (20) destiné, en position tirée, à constituer un ratelier de soutien du tournevis dynanométrique dans la fonction d'étalonnage, le tiroir comportant à cet effet une découpe (21) de forme conjuguée à la section droite de la gaine extérieure (6) du corps de poignée, ledit tournevis tenant dans ce cas le rôle de capteur statique.

**Patentansprüche**

1. Vorrichtung, welche die Realisierung erlaubt entweder der Prüfung oder der Nachbearbeitung des Anziehmomentes eines Verbindungsgliedes durch Schraubung an einem schon angezogenen Zusammenbau im Verlaufe der Herstellung oder des Prüfbetriebes, oder zu realisieren erlaubt die Prüfung oder Eichung der Maschine oder des Werkzeuges zum Anschrauben auf Anschlag auf das Moment, dadurch gekennzeichnet, daß sie aus der Assoziation eines Kraftmeßschraubendrehers drehers mit verformendem Element (1) und eines elektronischen Gehäuses (12) zum Messen des Momentes besteht, wobei die Prüfung des Anziehmomentes durch die Messung der Veränderung des Widerstandes von Dehnungsmeßstreifen erreicht wird, die mit dem verformenden Element formschlüssig verbunden sind, mittels Strom, welcher von dem Gehäuse geliefert wird, wobei der Schraubendreher, der mit dem Gehäuse formschlüssig gemacht ist, als statischer Meßfühler in der Verwendungsphase der Vorrichtung als Mittel zum Eichen oder Prüfen der Eichung dient.

2. Vorrichtung nach Anspruch 1, dadurch gekennzeichnet, daß der Kraftmeßschraubendreher aus einem Griffkörper (1) besteht mit einer abgesetzten Bohrung (2), in welcher das deformierende Element (3) eingebaut ist und bewegungsunfähig in Translation und Rotation mittels eines Stiftes (4), wobei der Körper (1), der von einem äußeren Schaumprofilmantel (6) bedeckt ist, welcher ein angenehmes Greifen des Schraubendrehers sicherstellt, durch ein geschraubtes Gehäuse oder ein Schutzvorderteil (5) verlängert ist, in dessen Innerem mittels eines Lagers (7) das freie Ende des deformierenden Elementes (3) zentriert ist, welches an seinem Endteil ein austauschbares Ansatzstück (9) oder Schraubwerkzeug trägt, wobei das deformierende Element durch Verklebung vier elektrische Dehnungsmeßstreifen (10) aufnimmt, deren Widerstandsveränderung, welche durch ihre Deformation hervorgerufen wird unter der Wirkung des Momentes, welches auf den Schraubendreher aufgebracht wird, durch das elektronische Gehäuse (12) gemessen wird.

3. Vorrichtung nach Anspruch 2, dadurch gekennzeichnet, daß die elektrischen Dehnungsmeßstreifen (10) auf das deformierende Element (3) gemäß dem Aufbau nach Art einer Wheatstone-Brücke geklebt sind, die im neutralen Zustand abgeglichen ist bei Abwesenheit jeder Torsion oder Belastung auf dem deformierenden Element, wobei die Widerstandsveränderung dieser Meßstreifen, die sich unter der Wirkung des Momentes deformieren, durch den Strom oder die Spannung der Unbalanz der Brücke gemessen wird, wobei die Lieferung des Stromes und die Messungen durch das Gehäuse sichergestellt sind.

4. Vorrichtung nach den Ansprüchen 1, 2 und 3, insgesamt genommen, dadurch gekennzeichnet, daß das Meßgehäuse (12) ein Dehnungsmeßverstärker ist, der aus vier Stufen aufgebaut ist:
- einer ersten Stufe, die aus einem Eingangsverstärker mit hoher Impedanz gebildet ist,
- einer zweiten Stufe, welche der automatischen Nullkorrektur entspricht und das absolute Nullstellen durch eine Drucktaste sicherstellt, wobei eine eventuelle Abweichung aufgrund mechanischer oder thermischer Erscheinungen gespeichert wird und gemäß dem Signal dieser Wert von der Endmessung abgezogen oder zu dieser hinzugefügt wird,
- einer dritten Stufe, welche die Rolle des Detektors für den absoluten Wert spielt, wobei die Signale gleichgerichtet werden, um am Ausgang Signale mit derselben Polarität unabhängig von der Torsionsrichtung des Meßwertgebers zu erhalten, um die Übereinstimmung mit der folgenden Stufe sicherzustellen,
- einer vierten Stufe, die als Scheiteldetektor dient und erlaubt, den maximalen Wert des Momentes zu speichern, welches auf das deformierende Element aufgebracht ist.

5. Vorrichtung nach der Gesamtheit der Ansprüche 1 bis 4, dadurch gekennzeichnet, daß das Meßgehäuse (12) mit einer Reglervorrichtung für den Durchlaßbereich mit vier Positionen ausgestattet ist, unter Berücksichtigung der Steifigkeit und der Anordnung, auf welche sich das Schraubelement im Verlaufe der Eichung auswirkt, wobei die letzte Position für Prüfungen durch Abreißen beim Nachziehen spezifisch ist.

6. Vorrichtung nach der Gesamtheit der Ansprüche 1 bis 5, dadurch gekennzeichnet, daß das Gehäuse (12) an einer seiner vertikalen Transversalseiten eine einziehbare Schublade (20) aufweist, die in herausgezogener Stellung einen Stützständer für den Kraftmeßschraubendreher in der Eichfunktion bildet, wobei die Schublade hierfür eine Aussparung (21) mit einer Form aufweist, welche dem Querschnitt des Außenmantels (6) des Griffkörpers entspricht, und der Schraubendreher in diesem Falle die Rolle des statischen Meßfühlers spielt.

## Claims

Device permitting the performance either of the the readjustment of the tightening torque of an appliance for connection by screwing on an assembly which is already tightened, in the course of production or in a control operation, or of the control or the calibration of the machine or of the tool for screwing with stopping at the torque, characterized in that it consists of the combination of a torque wrench having a deforming element (1) and of an electronic unit for measuring torque (12), the control of the tightening torque being implemented by the measurement of the variation of the resistance of strain gauges integral with the deforming element, via the current supplied by the unit, the said wrench, made integral with the unit, performing the function of static sensor in the phase of use of the device as calibrating means or as calibration control means.

2. Device according to Claim 1, characterized in that the torque wrench consists of a handle body (1) comprising a shouldered bore (2) in which there is embedded the deforming element (3) immobilized in trans lation and in rotation by means of a pin (4), the said body (1) covered with an external sheath of foam (6) of profile ensuring a convenient gripping of the wrench, being extended by a threaded casing or protective nose (5) within which there is centered by means of a rolling bearing (7) the free end of the deforming element (3) which free end carries, in its terminal part, an inter changeable bit (9) or screwing tool, the said deforming element receiving, by adhesive bonding, four electrical strain gauges (10), the variation of resistance of which, caused by their deformation under the action of the torque applied to the wrench, is measured by the electronic unit (12).

3. Device according to Claim 2, characterized in that the electrical strain gauges (10) are adhesively bonded on the deforming element (3) in accordance with a Wheatstone bridge circuit balanced in the neutral condition, in the absence of any torsion or stress on the deforming element the variation of resistance of which gauges deforming under the action of the torque being measured by the imbalance current or voltage of the bridge, the supply of the current and the measurements being provided by the unit.

4. Device according to Claims 1, 2 and 3 taken together, characterized in that the measuring unit (12) is a strain gauge amplifier consisting of four stages:

- a first stage consisting of a high-impedance input amplifier,
- a second stage corresponding to the automatic zero correction, ensuring the resetting to absolute zero by press button while storing a possible drift due to mechanical or thermal phenomena and subtracting this value from or adding this value to the final measurement, depending upon the sign,
- a third stage fulfilling the function of absolute value detector by rectifying the signals to obtain, at the output, signals having the same polarity, irrespective of the direction of torsion of the sensor, in order to ensure the compatibility with the following stage,
- a fourth stage fulfilling the function of peak detector permiting the storage of the maximum value of the torque applied to the deforming element.

5. Device according to the set of Claims 1 to 4, characterized in that the measuring unit (12) is equipped with a pass-band regulating device comprising four positions taking into account the stiffness of the assembly on which the screwing element acts in the course of calibration, the last position being specific to the controls via release to tightening.

6. Device according to the set of Claims 1 to 5, characterized in that the unit (12) comprises, on one of its transverse vertical faces, a retractable drawer (20) intended, in the drawn position, to constitute a rack for supporting the torque wrench in the calibration function, the drawer comprising for this purpose a cut-out (21) of form conjugate to the cross-section of the external sheath (6) of the handle body, the said wrench having, in this case, the function of static sensor.

_FIG.1_

_FIG.2_

_FIG.3_